**Europäisches Patentamt**

(19) **European Patent Office**

**Office européen des brevets**

(11) Veröffentlichungsnummer: **0 012 408**
**B1**

(12) **EUROPÄISCHE PATENTSCHRIFT**

(45) Veröffentlichungstag der Patentschrift:
23.06.82

(51) Int. Cl.³: **C 04 B 21/06**

(21) Anmeldenummer: **79105028.9**

(22) Anmeldetag: **10.12.79**

(54) Verfahren zur Herstellung von porösen keramischen Formkörpern.

(30) Priorität: 13.12.78 DE 2853762
15.03.79 DE 2910105

(43) Veröffentlichungstag der Anmeldung:
25.06.80 Patentblatt 80/13

(45) Bekanntmachung des Hinweises auf die Patenterteilung:
23.06.82 Patentblatt 82/25

(84) Benannte Vertragsstaaten:
AT BE CH DE FR GB IT LU NL SE

(56) Entgegenhaltungen:
DE-B-1 141 933
DE-B-1 253 132
DE-C-583 969
FR-A-1 283 693
FR-A-2 050 541

(73) Patentinhaber: **Pormit GmbH Porosierungsmittel für Baustoffindustrie, Ringenkuhl 7, D-3506 Helsa II OT Wickenrode (DE)**

(72) Erfinder: **Krause, Heinz J., D-3437 Hessisch-Lichtenau (DE)**
Erfinder: **Hirz, Harri, Am Berg 8, D-6431 Hauneck 2 (DE)**

(74) Vertreter: **Planker, Karl-Josef, Dipl.-Phys., c/o BABCOCK- BSH AKTIENGESELLSCHAFT Postfach 4+6, D-4150 Krefeld 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von porösen keramischen Formkörpern

Die Erfindung betrifft ein Verfahren zur Herstellung von porösen keramischen Formkörpern, insbesondere Leichtziegeln, bei dem einem Rohmaterial, insbesondere Lehm oder Ton, vor dem Verpressen ein Porosierungsmittel beigemischt wird, aus dem beim Brennen ein Gas entsteht.

In der Ziegelindustrie ist es lange bekannt, zwecks Verbesserung der Wärmedämmung der Ziegel dem Rohmaterial verdampfbare oder brennbare Porosierungsmittel zuzusetzen. Ein Aufsatz in der Zeitschrift »Ziegelindustrie« 9 (1978), Seiten 500 bis 516 enthält eine zusammenfassende Darstellung, in der mehr als dreißig Literaturstellen angegeben sind, die sich mit diesem Thema befassen.

Von den zahlreichen angegebenen Porosierungsmitteln haben nur wenige eine praktische Bedeutung erlangt.

Wohl am weitesten verbreitet ist die Verwendung von Polystyrolschaum. Dieses Material wird in Form von Kugeln mit Durchmessern zwischen 1 und 4 mm zugesetzt. Ein Feinkronanteil ist nicht vorhanden. Daher fehlt im fertigen Ziegel die Mikroporosität, die für die Erzielung hoher Wärmedämmwerte besonders wichtig ist. Die maximal zusetzbare Menge ist ziemlich eng begrenzt, weil bei zu hohem Anteil zwischen den entstehenden Löchern keine ausreichenden Stege verbleiben, so daß die Festigkeit niedrig und ungleichmäßig wird. Daher ist es bei schweren Tonen kaum möglich, die geforderten Werte zu erreichen. Schon in der Anwärmzone wird das Polystyrolmaterial bei etwa 160°C vergast. Durch das entweichende Gas bilden sich in den Ziegeln unerwünschte, nach außen offene Kanäle. Der an sich hohe Heizwert des Materials geht ungenutzt durch den Schornstein. Die Abgase belasten die Umwelt, wenn sie nicht in kostspieligen Nachverbrennungseinrichtungen beseitigt werden. Infolge der Kompressebilität des Materials neigen die Formlinge immer dazu, sich nach dem Pressen auszudehnen, zu verziehen oder rissig zu werden.

Eine gewisse Bedeutung hat auch der Zusatz von Sägemehl als Porosierungsmittel erhalten. Dieses hat stets eine faserige oder nadelige Struktur. Dadurch wird das Fließverhalten beim Pressen gestört. Der Kraftbedarf nimmt erheblich zu. Die Verdichtung fällt ungleichmäßig aus, und es bilden sich Schichtstrukturen, die die Festigkeit und die Frostbeständigkeit herabsetzen. Das Sägemehl wird im Ofen bei Temperatur über 500° verbrannt. Hierdurch wird die Ofenführung erschwert. Denn das Ausbrennen kann nur langsam erfolgen, weil einerseits der erforderliche Sauerstoff nur langsam eindiffundiert und andererseits ein zu schnelles Ausbrennen wegen des hohen Heizwertes eine zu große Wärmemenge freisetzt, die bei schnellerem Ausbrennen zum Glühen und zur Zerstörung der Ziegelformlinge führt. Aus dem letzteren Grunde ist überhaupt nur ein relativ geringer Zusatz zulässig und damit auch nur eine geringe Porosität erreichbar. Vielfach ist das Ausbrennen nur unvollständig. Es verbleiben mit Rückständen gefüllte schwarze Kerne, die eine Verschlechterung der Wärmedämmung und der Festigkeit bewirken, das Aussehen sehr beeinträchtigen und die Gefahr des Nachglühens bedingen.

Andere bekannte Zusätze, die nur wenig praktische Bedeutung erlangt haben, sind z. B. Torf, Kohlenstaub, Perlit, Getreidespelzen oder Flotationsberge. Hierbei treten im wesentlichen ähnliche Nachteile auf wie bei den zuerst beschriebenen Stoffen.

Bekannt ist auch schon die Verwendung von Kork. Dieser kommt aber wegen seines hohen Preises in der Praxis nur bei besonders hochwertigen Steinen für Spezialanwendungen zur Verwendung.

Die DE-C-583 969 lehrt die Verwendung von Kiefernborke und hebt u. a. deren niedrigen Heizwert hervor. Die Druckschrift enthält aber keinen Hinweis in der Richtung, die Rinde so auszuwählen oder zu beeinflussen, daß durch den innewohnenden Heizwert eine möglichst große Brennstofferfsparnis erzielt wird.

Der Erfindung liegt die Aufgabe zugrunde, ein Verfahren der eingangs angegebenen Gattung anzugeben, das unter Verwendung eines billigen, aus reichlich verfügbaren Ausgangsstoffen herstellbaren Porosierungsmittels bei normaler Ofenführung ohne störende Rückstände, ohne Umweltbelastung und ohne Überhitzung des Ofeneinsatzes eine Nutzung des dem Porosierungsmittel innewohnenden Heizwertes zuläßt und dabei Formkörper, insbesondere Leichtziegel, mit hoher Festigkeit, guter Wärmedämmung und guter Maßhaltigkeit liefert.

Diese Aufgabe wird erfindungsgemäß durch die im Kennzeichen des Anspruchs 1 angegebenen Maßnahmen gelöst.

Bei der Schaumkohle handelt es sich um ein brennbares Material, dessen Heizwert durch lockere, poröse Struktur im Vergleich zu einem aus massiven Körnern bestehenden Material relativ niedrig ist. Dieser Heizwert kommt beim Ausbrennen voll dem Ofenprozeß zugute und ermöglicht eine beträchtliche Brennenergieersparnis. Er ist aber niedrig genug, um eine Materialschädigung durch Überhitzung zu vermeiden. Trotz der lockeren Struktur ist das Granulat mechanisch stabil und praktisch inkompressibel.

Schaumkohle läßt sich unter Verwendung von Stein- oder Braunkohlenstaub oder kohlehaltigen Abfällen, wie Flugasche, unter Zusatz von Schaum herstellen. Dabei ist das Schüttvolumen der fertigen Schaumkohle etwa drei- bis viermal so groß wie das der Ausgangsstoffe, und entsprechend ist der Heizwert herabgesetzt.

Der Schaumkohle kann auch zerkleinerte Rinde beigemischt werden.

Die Rinde fällt in der Holzindustrie beim Entrinden zur Verarbeitung bestimmter gefällter Stämme beliebiger Art in großen Mengen als wertloser Abfall an und steht daher praktisch kostenlos zur Verfügung. Da die Rinde bisher kaum nutzbringend zu verwerten war, mußte sie entweder auf Deponien abgelagert, einer Verbrennungsanlage zugeführt oder, um eine Schädigung des Bodens durch den hohen Gerbsäuregehalt möglichst zu vermeiden, großflächig im Wald verteilt werden. In jedem Fall war die Entsorgung mit erheblichen Kosten verbunden.

Gemäß Anspruch 3 liegt der Heizwert vorzugsweise in einem Bereich, der etwa $1/10$ bis $1/2$ des Heizwertes von geschütteter Braunkohle mittlerer Qualität beträgt. Die genaue Wahl des optimalen Heizwertes hängt vor allem von der Menge des erforderlichen Porosierungsmittels ab.

Gemäß Anspruch 4 soll die Korngröße zweckmäßig begrenzt sein, damit insbesondere bei Lochziegeln, die Festigkeit der verbleibenden Stege nicht durch übergroße Poren beeinträchtigt wird.

Durch Abstimmen der Korngröße auf dichte Kugelpackung gemäß Anspruch 5 wird erreicht, daß auch die Poren in den Ziegeln eine dichte Packung bilden, ohne daß die Festigkeit allzu sehr beeinträchtigt wird. Wichtig ist dabei, daß auch ein Feinkornanteil vorhanden ist, der für die besonders erwünschte Mikroporosität sorgt.

Erforderlichenfalls läßt sich der Feinkornanteil durch den Zusatz von Holzmehl gemäß Anspruch 6 vergrößern. Unter Holzmehl wird hierbei vorzugsweise Holzschliff verstanden, der eine mehr körnige als faserige Struktur aufweist, wobei die Korngröße unter 1 mm liegen soll.

Durch die Maßnahme gemäß Anspruch 7 wird erreicht, daß sich das Porosierungsmittel in den Rohton besonders leicht einmischen läßt, wenn dieser die vorgeschriebene Feuchte für die Weiterverarbeitung aufweist. Wenn aber der Rohton zu naß oder zu trocken ist, wird zweckmäßig gemäß Anspruch 8 die Feuchte des Porosierungsmittels so eingestellt, daß das Gesamtgemisch auf die vorgeschriebene Feuchte kommt.

Eine Reihe von Ziegeleien, die bereits auf die Verwendung von Polystyrolschaumkügelchen eingestellt sind, legen Wert auf die charakteristische Oberflächenstruktur, die die Ziegel hierbei erhalten. Mit der Maßnahme des Anspruchs 9 ist es möglich, unter weitgehender Ausschaltung der Nachteile, die bei der ausschließlichen Verwendung von Polystyrolschaumkügelchen als Porosierungsmittel auftreten, diese charakteristische Oberflächenstruktur zu erhalten und dabei die Vorteile der Erfindung zu nutzen.

Optimale Eigenschaften erreicht man in den meisten Fällen, wenn der Anteil der Polystyrolschaumkügelchen in dem in Anspruch 10 angegebenen Bereich liegt.

Bei dem erfindungsgemäßen Verfahren geht man beispielsweise folgendermaßen vor: Mit einem handelsüblichen Schaumgerät wird aus einem Gemisch von etwa 99% Wasser und etwa 1% Schaumkonzentrat (Tensid, Fettalkoholsulfat, Alkylsulfonat od. dgl.) ein stabiler, mikroporöser Schaum hergestellt, dessen Dichte nur etwa 30 bis 60 g/l beträgt. Hiervon getrennt wird eine Mischung aus folgenden Bestandteilen hergestellt:

| | |
|---|---|
| 8 | Gewichtsteile Braunkohlenstaub |
| 8 | Gewichtsteile Holzschliff |
| 27 | Gewichtsteile Rinde |
| 2,6 | Gewichtsteile Perlitabfälle |
| 27 | Gewichtsteile Sulfitablauge als Binder |
| 26 | Gewichtsteile Zusatzwasser. |

Diese Mischung wird mit 1,4 Gewichtsteilen Schaum versetzt und z. B. in einem Betonmischer oder einem Doppelwellenmischer intensiv durchmischt. Dabei entsteht eine schaumige Masse von pastenartiger Konsistenz. Diese wird granuliert, indem sie z. B. mit einer Schnecke durch eine Lochplatte hindurchgedrückt wird. Die Stränge werden getrocknet und gemahlen. Das Mahlgut hat schon ein kontinuierliches Korngrößenspektrum, das einer dichten Packung schon ziemlich nahe kommen kann. Durch Absieben kann das Korngrößenspektrum weiter optimiert werden, so daß sich z. B. folgende Verteilung ergibt:

| | |
|---|---|
| 20 bis 40% | 1,5 bis 3,5 mm |
| 20 bis 40% | 0,5 bis 1,5 mm |
| 30 bis 50% | 0 bis 0,2 mm. |

Das so erhaltene Material hat auch in trockenem Zustand eine lockere, schaumige Struktur. Die Körner sind stabil und nicht kompressibel. Das Material ist versand- und lagerfähig.

Die Feuchte des Materials wird so eingestellt, daß sie mit der Feuchte des Rohtons übereinstimmt, die für das Verpressen optimal ist. Diese liegt im allgemeinen zwischen 17 und 37%. Bei dieser Feuchte ist das Porosierungsmittel noch rieselfähig, da der Wassergehalt infolge der porösen Struktur kapillar gebunden ist.

Bei leichten Rohtonen genügt ein Zusatz von 10 bis 20 Volumenprozent, um ein Scherbengewicht von maximal 1,45 kg/l zu erreichen. Bei schweren Tonen liegt die erforderliche Menge des Porosierungsmittels bei etwa 25 bis 40%. Diese Mengen lassen sich infolge der günstigen Kornform und Oberflächenbeschaffenheit des Porosierungsmittels leicht einmischen. Es ist sogar möglich, erheblich größere Mengen zuzusetzen und auf diese Weise das Scherbengewicht weit unter den vorgeschriebenen Wert zu verkleinern, der mit herkömmlichen Porosierungsmitteln kaum zu erreichen ist.

Es hat sich gezeigt, daß sich das Gemisch mit erheblich reduziertem Kraftaufwand verpressen läßt. Bei einem Versuch wurde an der Presse eine Stromstärke von 40 A gemessen gegenüber 100 A bei Verwendung eines herkömmlichen Porosierungsmittels. Offensichtlich wird durch das Schaummittel das Fließvermögen erheblich verbessert, so daß sich die Partikel mit geringster Reibung in die günstigste spannungsfreie Lage einordnen. Die unerwünschten Spiralstrukturen, die bekanntlich in der Schneckenpresse durch die Geschwindigkeitsdifferenz zwischen Strangmitte und Außenbereich erzeugt werden, treten nicht mehr auf.

Beim Brennen wird das Porosierungsmittel während der normalen Brenndauer restlos verbrannt. Hierzu genügt der aus der Ofenatmosphäre eindiffudierende Sauerstoff in Verbindung mit dem in den geschäumten Körpern eingeschlossenen Sauerstoff. Das entstehende Kohlendioxid entweicht offenbar durch Diffusion. Jedenfalls werden bei den fertigen Ziegeln keine Gaskanäle beobachtet. Der Heizwert des Porosierungsmittels kommt voll dem Brennprozeß zugute. Beträgt beispielsweise der Heizwert des Porosierungsmittels $8 \times 10^3$ kJ/kg und geht man von einem Zusatz von 30 Volumenprozent zum Rohton aus, so ergibt sich eine Wärmeersparnis von etwa $8 \times 10^5$ kJ/m³ gelochte Ziegel.

In einem neutralen Laboratorium wurde eine Serie von Ziegeln, die unter Zusatz von 30% des nach der Erfindung hergestellten Porosierungsmittels in einer normalen Produktionsanlage gebrannt waren (Ziegel 1) mit Ziegeln verglichen, die auf der gleichen Anlage unter Zusatz von 50 Volumenprozent Polystyrolschaumkugeln hergestellt waren (Ziegel 2). Es ergaben sich folgende Mittelwerte:

|  | Ziegel 1 | Ziegel 2 |
|---|---|---|
| Raumdichte g/cm³ | 1,49 | 1,47 |
| Wasseraufnahme % | 32,7 | 32,9 |
| Scheinbare Porosität % | 47,0 | 48,3 |
| Wärmeleitfähigkeit bei 20°C, W/mK | 0,482 | 0,468 |

Die Wärmeleitfähigkeit wurde nach dem in der Norm DIN 51 048 vorgeschriebenen Heißdraht-Verfahren ermittelt. Das Heißdraht-Verfahren erbringt erfahrungsgemäß gegenüber den bisher in Deutschland zumeist verwendeten kalorimetrischen Verfahren (z. B. nach ASTM) oder gegenüber dem Vergleichsverfahren um etwa 30 bis 50% höhere Werte. Dies ist bei einem Vergleich der angegebenen Ergebnisse mit den in der einschlägigen Fachliteratur vorliegenden Werten zu beachten.

In bezug auf diese Eigenschaften stimmen die Werte bei beiden Ziegelarten also praktisch überein. Gemäß amtlichem Prüfungszeugnis wurde jedoch für die Ziegel 1 eine mittlere Druckfestigkeit von 11,3 N/mm² festgestellt gegenüber 7,5 N/mm² bei üblichen Ziegeln, die unter Verwendung von geschäumtem Polystyrol hergestellt sind.

Das Verfahren läßt sich im Rahmen der Ansprüche in vielfacher Weise variieren. So kann das Porosierungsmittel, abweichend von dem angegebenen Beispiel, statt Braunkohlenstaub natürlich auch Steinkohlenstaub enthalten, wenn dieser leichter verfügbar ist. Es steht nichts im Wege, eine Schaumkohle zu verwenden, deren Kohleanteil gegenüber dem angegebenen Beispiel erheblich größer ist. Man kann auch die Kohle ganz oder teilweise in Form von Flugasche einbringen. Das so hergestellte Porosierungsmittel hat einen besonders niedrigen Heizwert. Es kann auch zusätzlich heizwertmindernde Füllstoffe, wie Perlit, enthalten. Statt der erwähnten Sulfitablauge kann es auch andere Bindemittel enthalten, wie Gips, Wasserglas, Stärke oder Dextrin.

Eine andere Variante der Herstellung des Porosierungsmittels besteht darin, daß Baumrinde und/oder Holzmehl im nassen Zustand mit Schaummittel durchsetzt werden und daß anschließend die übrigen Feststoffe zugemischt werden. Es ist auch möglich, zunächst nur die Kohle, gegebenenfalls zusammen mit inerten Bestandteilen, wie Füllstoffen und Bindemitteln, mit Schaum zu versetzen, zu granulieren, zu trocknen und zu mahlen und anschließend das so erhaltene Produkt mit gemahlener Rinde und/oder Holzmehl zu mischen. Dabei füllt die Rinde vor allen den Grobkornbereich auf, das Holzmehl den Feinkornbereich. Da Holzmehl einen relativ hohen, Rinde aber einen relativ niedrigen Heizwert hat, läßt sich durch die Wahl des Mischungsverhältnisses auch der Heizwert der Gesamtmischung in einem gewissen Bereich steuern.

Das Verhältnis Rinde zu Schaumkohle kann je nach der gewünschten Feuchte, mit der das Porosierungsmittel dem Rohton zugesetzt werden muß, variiert werden. Wenn eine sehr hohe Feuchte verfahrenstechnisch zweckmäßig ist — beispielsweise weil der Rohton zu trocken ist — wird ein großer Anteil an Rinde gewählt. Eine normale Feuchte von z. B. 35% läßt sich aber auch mit reiner Schaumkohle realisieren, ohne daß die Rieselfähigkeit beeinträchtigt wird.

Wenn der Zusatz von Polystyrolschaumkügelchen erwünscht ist, werden diese mit den übrigen Bestandteilen des Porosierungsmittels gründlich gemischt. Falls erforderlich, können sie vorher mit einer Schicht aus Schlicker umhüllt werden, um das Einmischen in den Rohton zu erleichtern. Da die in der Ziegelherstellung verwendeten Kügelchen bekanntlich Durchmesser von etwa 1 bis 4 mm aufweisen, werden die übrigen Bestandteile vorher gemahlen und/oder abgesiebt, so daß die Teilchen größtenteils in einem Korngrößenbereich unter 1 mm liegen. Auf diese Weise läßt sich erreichen, daß die Gesamtmischung eine Korngrößenverteilung erhält, die etwa einer dichtesten Kugelpackung entspricht. Die Hohlräume, die zwischen den Polystyrolschaumkügelchen bestehen, werden im wesentlichen durch die feinkörnigeren übrigen Bestandteile ausgefüllt. Dieses günstige Korngrößenspektrum, das sich allein mit Polystyrolschaumkugeln nicht realisieren läßt, ist für die Erzielung eines hohen Porosierungsgrades mit ausgeprägter Mikroporosität sehr wichtig. Das so hergestellte Porosierungsmittel wird dem Rohton beigemischt. Aus dem Gemisch werden in üblicher Weise Ziegelformlinge gepreßt. Im Ofen zersetzt sich das Polystyrol schon in der Anwärmzone, nachdem eine Temperatur von etwa 160° C erreicht ist. Die übrigen Bestandteile des Porosierungsmittels verbrennen bei Temperaturen über 400° C.

Gegenüber einem Verfahren, bei dem allein Polystyrolschaumkügelchen als Porosierungsmittel zur Verwendung kommen, hat das Verfahren gemäß den Ansprüchen 9 und 10 vor allem den Vorteil, daß — bezogen auf das Volumen — eine wesentlich größere Menge Porosierungsmittel zugesetzt werden kann. Die Polystyrolschaumkügelchen sorgen für eine aufgerauhte Oberfläche. Dies ergibt sich aus der Kompressibilität des Polystyrolschaums. Die in Oberflächennähe eingeschlossenen Kügelchen drücken nämlich bei ihrer Ausdehnung nach dem Pressen etwas von dem umhüllenden feuchten Rohton nach außen. Dadurch entstehen unregelmäßig geformte Vorsprünge, die auch beim anschließenden Brennen erhalten bleiben. Sie machen die Porenstruktur optisch deutlich erkennbar und verleihen dem fertigen Ziegelstein die bekannte eigenartig aufgerauhte Oberfläche, an der ein Putz besonders gut haftet. Die Menge der zugesetzten Polystyrolschaumkügelchen kann aber so gering gehalten werden, daß sie nicht in der Lage sind, die Ziegelrohlinge zu deformieren oder Risse zu verursachen. Die übrigen Bestandteile tragen zwar erheblich zur Porosität bei, haben aber keinerlei Tendenzen, den Rohling zu verformen, da sie praktisch inkompressibel sind und infolgedessen keine Rückstellkräfte ausüben. Sie können daher ohne Gefahr in großen Mengen zugesetzt werden.

Natürlich wird durch den Zusatz von Polystyrol der nutzbare Heizwert des Porosierungsmittelgemischs erheblich beeinflußt. Wie eingangs ausgeführt, bleibt der an sich hohe Heizwert des Polystyrols ungenutzt. Durch passende Zusammensetzung der übrigen Bestandteile des Porosierungsmittels kann der Heizwert der Gesamtmischung gerade so eingestellt werden, daß er dem Brennprozeß zu Nutze kommt, ohne daß schwarze Kerne verbleiben und ohne daß die Gefahr der Überhitzung zu befürchten ist. Bei Ziegeleien, die auf die Verwendung von Polystyrolschaum eingestellt sind, ist hierzu lediglich eine neue Einstellung der Ofensteuerung erforderlich. Entsprechend dem Heizwert des Porosierungsmittels ergibt sich eine erhebliche Wärmeersparnis.

Gerade für die zuletzt erwähnten Ziegeleien ist das Verfahren gemäß den Ansprüchen 9 und 10 besonders geeignet. Diese verfügen bereits über die nötigen Schornsteine oder Nachverbrennungseinrichtungen, die für die Beseitigung der beim Brennen frei werdenden schädlichen Zersetzungsgase des Polystyrols erforderlich sind. Aber auch Ziegeleien, die nicht über die erforderlichen Einrichtungen verfügen, um bei ausschließlicher Verwendung von Polystyrolschaumkügelchen die Abgase unschädlich zu machen, können jetzt Ziegel mit der charakteristischen Oberflächenstruktur herstellen. Denn zur Erreichung dieser Wirkung reicht in vielen Fällen schon ein relativ geringer Polystyrolanteil aus, so daß die maximal zulässigen Emissionswerte unterschritten werden.

**Patentansprüche**

1. Verfahren zur Herstellung von porösen keramischen Formkörpern, insbesondere Leichtziegeln, bei dem einem Rohmaterial, insbesondere Lehm oder Ton, vor dem Verpressen ein Porosierungsmittel beigegeben wird, aus dem beim Brennen ein Gas entsteht, dadurch gekennzeichnet, daß als Porosierungsmittel Schaumkohlengranulat verwendet wird.

2. Verfahren nach Anspruch 1, dadurch gekennzeichnet, daß zerkleinerte Baumrinde beigemischt wird.

3. Verfahren nach Anspruch 1 oder 2, dadurch gekennzeichnet, daß ein Porosierungsmittel mit einem Heizwert von 1 bis $6 \cdot 10^6$ kJ/m³ verwendet wird, vorzugsweise 1 bis $4 \cdot 10^6$ kJ/m³, bezogen auf das geschüttete Material.

4. Verfahren nach Anspruch 1 bis 3, dadurch gekennzeichnet, daß die maximale Korngröße des Porosierungsmittels durch Absieben auf 5 mm begrenzt wird.

5. Verfahren nach einem der Ansprüche 1 bis 4, dadurch gekennzeichnet, daß das Korngrößenspektrum auf dichteste Packung abgestimmt wird.

6. Verfahren nach einem der Ansprüche 1 bis 5, dadurch gekennzeichnet, daß dem Granulat zusätzlich Holzmehl zugesetzt wird.

7. Verfahren nach einem der Ansprüche 1 bis 6, dadurch gekennzeichnet, daß der Feuchtegehalt des Porosierungsmittels vor dem Vermischen mit dem Rohton, der bereits die vorgeschriebene Feuchte aufweist, auf die Feuchte des Rohtons eingestellt wird.

8. Verfahren nach einem der Ansprüche 1 bis 6, dadurch gekennzeichnet, daß der Feuchtegehalt des Porosierungsmittels zusammen mit dem Feuchtegehalt des Rohtons der vorgeschriebenen Feuchte der Gesamtmischung entspricht.

9. Verfahren nach einem der Ansprüche 1 bis 8, dadurch gekennzeichnet, daß das Porosierungsmittel zusätzlich Polystyrolschaumkügelchen enthält.

10. Verfahren nach Anspruch 9, dadurch gekennzeichnet, daß der Anteil der Polystyrolschaumkügelchen an dem gesamten Schüttvolumen des Porosierungsmittels 20 bis 60% beträgt.

foam pellets in the complete bulk volume of the porosifying agent eing 20—60%.

## Claims

1. Process of producing porous ceramic bodies, particularly light-weight bricks, which includes admixing a porosifying agent to the raw material, particularly loam or clay, forming the mass into bodies of the shape desired, burning these bodies and thereby transforming the porosifying agent into gas, characterized by using granulated carbon foam for a porosifying agent.

2. Process in accordance with claim 1, characterized by using disintegrated bark as an additive.

3. Process in accordance with claim 1 or 2, characterized by using a porosifying agent having a calorific value of $1-6 \cdot 10^6$ kJ/m$^3$, preferably $1-4 \cdot 10^6$ kJ/m$^3$, with reference to the loose bulk material.

4. Process in accordance with claims 1 to 3, characterized by limiting the maximum particle size of the porosifying agent to 5 mm by screening.

5. Process in accordance with one of the claims 1 to 4, characterized by chosing a particle size range assuring packing of highest density.

6. Process in accordance with one of the claims 1 to 5, characterized by additionally admixing wood flour to the granulated porosifying agent.

7. Process in accordance with one of the claims 1 to 6, characterized by adjusting the moisture content of the porosifying agent to that of the raw clay which already contains the correct percentage of moisture, before the two components are mixed.

8. Process in accordance with one of the claims 1 to 6, characterized by the moisture content of the porosifying agent together with the moisture content of the raw clay resulting in the specified moisture content of the complete mixture.

9. Process in accordance with one of the claims 1 to 8, characterized by the porosifying agent additionally containing pellets of polystyrol foam.

10. Process in accordance with claim 9, characterized by the proportion of polystyrol

## Revendications

1. Procédé de fabrication d'objets céramiques poreux conformés ou moulés, notamment des briques légères, selon lequel on ajoute à une matière crue, notamment de la terre glaise ou de l'argile, avant la compression, un agent porogène dégageant un gaz lors de la cuisson, procédé caractérisé en ce qu'on utilise comme agent porogène du granulé de mousse de charbon.

2. Procédé selon la revendication 1, caractérisé en ce qu'on incorpore par mélange de l'écorce d'arbre broyée.

3. Procédé selon la revendication 1 ou 2, caractérisé en ce qu'on utilise un agent porogène présentant un pouvoir calorifique de 1 à 6.10$^6$ kJ/m$^3$, de préférence 1 à 4.10$^6$ kJ/m$^3$, par rapport à la matière en vrac.

4. Procédé selon les revendications 1 à 3, caractérisé en ce que la grosseur maximale des grains de l'agent porogène est limitée par tamisage à 5 mm.

5. Procédé selon l'une des revendications 1 à 4, caractérisé en ce que la granulométrie est déterminée d'après le tassement le plus dense.

6. Procédé selon l'une de revendications 1 à 5, caractérisé en ce qu'on ajoute encore aux granulés de la farine de bois.

7. Procédé selon l'une des revendications 1 à 6, caractérisé en ce qu'on ajuste, selon l'humidité de l'argile crue, la teneur en humidité de l'agent porogène avant de le mélanger à l'argile crue, laquelle présente déjà l'humidité prescrite.

8. Procédé selon l'une des revendications 1 à 6, caractérisé en ce que la teneur en humidité de l'agent porogène, comptée avec la teneur en humidité de l'argile crue, correspond à l'humidité prescrite pour le mélange total.

9. Procédé selon l'une des revendications 1 à 8, caractérisé en ce que l'agent porogène contient en outre des billes ou sphères de mousse de polystyrène.

10. Procédé selon la revendication 9, caractérisé en ce que la proportion des billes de mousse de polystyrène représente 20 à 60% du volume apparent total de l'agent porogène.